# EUROPÄISCHE PATENTANMELDUNG

(11) **EP 2 713 062 A2**
(43) Veröffentlichungstag der Anmeldung: **02.04.2014**
(21) Anmeldenummer: 13183836.9
(22) Anmeldetag: 11.09.2013
(51) Int. Cl.: F16B 5/02

(54) **Verbindungsanordnung zum Verbinden eines Trägerteils mit einem Verkleidungsteil**

(30) Priorität: 27.09.2012 DE 202012103704 U
(71) Anmelder: REHAU AG + Co, 95111 Rehau (DE)
(72) Erfinder: Ruder, Jürgen, 85092 Kösching (DE)

(57) **Zusammenfassung**

Die vorliegende Erfindung bezieht sich auf eine Verbindungsanordnung mit selbsttätigem Ausgleich von fertigungs- und/oder montagebedingten Toleranzen zum Verbinden eines Trägerteils (1) mit einem Verkleidungsteil (2), umfassend ein Trägerteil (1) mit einem Montagebereich (3, 3a), ein Verkleidungsteil (2) mit einem weiteren Montagebereich (3, 3b), ein Verbindungsteil (4) zum Verbinden der beiden Montagebereiche (3, 3a, 3b) von Trägerteil (1) und Verkleidungsteil (2), wobei die Verbindungsanordnung ferner ein Spreizelement (5) mit einem, vorzugsweise länglich ausgebildeten, Spreizkörper (6) umfasst, an einem Montagebereich (3, 3a) ein rohrförmiges Aufnahmeelement (7) zur Aufnahme des Spreizkörpers (6) vorgesehen ist, wobei der Spreizkörper (6) und das Aufnahmeelement (7) so aufeinander abgestimmt sind, dass der Spreizkörper (6) innerhalb des Aufnahmeelements (7) beweglich lager- und/oder verschiebbar ist, wenn der Spreizkörper (6) ungespreizt ist, das Verbindungsteil (4) einen Klemmbereich (8, 8') aufweist der das Aufnahmeelement (7) zumindest bereichsweise außenseitig umgreift, das Verbindungsteil (4) einen von dem Klemmbereich (8, 8') beabstandeten Verbindungsbereich (9, 9') zum Verbinden mit dem anderen Montagebereich (3, 3b) aufweist, und das Aufnahmeelement (7) so ausgebildet ist, dass durch das Spreizen des in dem Aufnahmeelement (7) zumindest abschnittsweise aufgenommenen Spreizkörpers (6) das Aufnahmeelement (7) durch den Spreizkörper (6) aufgeweitet, und zwischen dem Aufnahmeelement (7) und dem Klemmbereich (8, 8') ein Kraft-, Reib- und/oder Formschluss hergestellt wird.

## Beschreibung

Die vorliegende Erfindung betrifft eine Verbindungsanordnung mit selbsttätigem Ausgleich von fertigungs- und / oder montagebedingten Toleranzen zum Verbinden eines Trägerteils mit einem Verkleidungsteil, umfassend ein Trägerteil mit einem Montagebereich, ein Verkleidungsteil mit einem weiteren Montagebereich und einem Verbindungsteils zum Verbinden der beiden Montagebereiche von Trägerteil und Verkleidungsteil.

Eine gattungsgemäße Verbindungsanordnung kann der EP 2 369 184 A2 entnommen werden. Dort ist eine Verbindungsanordnung offenbart, die zum Abstützen eines Verkleidungsteils an einem Trägerteil zum Ausgleich von fertigungs- und / oder montagebedingten Toleranzen zwischen den beiden Bauteilen ein Verbindungsteil vorgesehen ist, das die beiden Bauteile verbindet. Konstruktionsbedingt muss dieses Verbindungsteil jedoch zum einen möglichst senkrecht in einem Kraftfahrzeug angeordnet sein, zum anderen kann das Verbindungselement überhaupt nicht verwendet werden, wenn die beiden Montagebereiche der Bauteile in Fahrzeug-x-Richtung oder Fahrzeug-y-Richtung zu weit auseinander liegen. Darüber hinaus erfolgt in der Verbindungsanordnung gemäß des Standes der Technik lediglich eine Toleranzausgleich in z-Richtung und ohne einen Formschluss, so dass sowohl die Verbindungsfestigkeit zwischen Verkleidungsteil und Trägerteil als auch die Variabilität der Verbindungsanordnung eingeschränkt ist.

Die Aufgabe der Erfindung ist es daher, eine gattungsgemäße Verbindungsanordnung anzugeben, die gegenüber dem Stand der Technik einen verbesserten Toleranzausgleich zwischen dem Trägerteil und dem Verkleidungsteil ermöglicht.

Die erfindungsgemäße Aufgabe wird gelöst durch eine Verbindungsanordnung mit selbsttätigem Ausgleich von fertigungs- und / oder montagebedingten Toleranzen zum Verbindung eines Trägerteils mit einem Verkleidungsteil, umfassend ein Trägerteil mit einem Montagebereich, ein Verkleidungsteil mit einem weiteren Montagebereich und einem Verbindungsteil zum Verbinden der beiden Montagebereiche von Trägerteil und Verkleidungsteil, wobei erfindungsgemäß vorgesehen ist, dass die Verbindungsanordnung ferner ein Spreizelement mit einem, vorzugsweise länglich ausgebildeten, Spreizkörper umfasst, an einem Montagebereich ein rohrförmiges Aufnahmeelement zur Aufnahme des Spreizkörpers vorgesehen ist, wobei der Spreizkörper und das Aufnahmeelement so aufeinander abgestimmt sind, dass der Spreizkörper innerhalb des Aufnahmeelements beweglich lager- und / oder verschiebbar ist, wenn der Spreizkörper ungespreizt ist, das Verbindungsteil einen Klemmbereich aufweist, der das Aufnahmeelement zumindest bereichsweise außenseitig umgreift, das Verbindungsteil einen von dem Klemmbereich beabstandeten Verbindungsbereich zum Verbinden mit dem anderen Montagebereich aufweist und das Aufnahmeelement so ausgebildet ist, dass durch das Spreizen des in dem Aufnahmeelement zumindest abschnittsweise aufgenommenen Spreizkörpers das Aufnahmeelement durch den Spreizkörper aufgeweitet und zwischen dem Aufnahmeelement und dem Klemmbereich ein Kraft-, Reib- und / oder Formschluss hergestellt wird. In vorteilhafter Weise sind das Spreizelement bzw. der Spreizkörper und das Aufnahmeelement zunächst gegeneinander beweglich gelagert und / oder verschiebbar, so dass fertigungs- und / oder montagebedingte Toleranzen, insbesondere in z-Richtung, ausgeglichen werden können. Vorteilhafterweise wird durch das Vorsehen einer Kombination von Spreizkörper und Aufnahmeelement zudem verhindert, dass beim Spreizen des Spreizkörpers, aufgrund einer hierfür erforderlichen Krafteinwirkung auf das Spreizelement, das Verkleidungsteil oder das Trägerteil (je nachdem an welchem der Bauteile das Aufnahmeelement angeordnet ist) aus seiner festzulegenden Montageposition wieder verschoben werden kann. Insgesamt kann durch die erfindungsgemäße Verbindungsanordnung somit ein verbesserter Toleranzausgleich zwischen dem Trägerteil und dem Verkleidungsteil erreicht werden.

Im Zusammenhang mit den verwendeten Richtungen liegt diesen das bei Kraftfahrzeugen gebräuchliche Kraftfahrzeugkoordinatensystem zugrunde, deren positive x-Achse (x-Richtung) entgegen der Fahrtrichtung des Kraftfahrzeuges nach hinten, deren y-Achse (y-Richtung) in Fahrtrichtung nach rechts zeigt und deren positive z-Achse (z-Richtung) senkrecht nach oben weisend auf der x-y-Ebene des Kraftfahrzeugs steht.

Zum Spreizen des Spreizkörpers kann ein Spreizmittel vorgesehen sein. Das Spreizmittel kann insbesondere ein Schraubelement sein, welches innerhalb des Spreizkörpers aufnehmbar ist. Spreizkörper und Spreizmittel wirken vorzugsweise wie ein dem Fachmann bekanntes Dübelelement.

Das Aufnahmeelement weist vorzugsweise mindestens eine schlitzförmige Materialausnehmung auf, die sich beim Spreizen des Spreizkörpers aufweitet. In gewisser Weise stellen Aufnahmeelement und Spreizkörper somit zwei ineinander gestellte Spreizkörper oder Spreizelemente dar. Die Materialausnehmung kann sich hierbei bevorzugt über mindestens die Hälfte der Längserstreckung des rohrförmigen Aufnahmeelements erstrecken.

In einer bevorzugten Ausführungsform der Verbindungsanordnung kann das Spreizelement einstückig mit dem Verkleidungsteil, dem Trägerteil oder dem Verbindungsteil hergestellt sein. Zur Herstellung des Verkleidungsteils bzw. des Trägerteils eignen sich insbesondere Kunststoff-Spritzgussverfahren, bei welchen aus Kostengründen innerhalb eines entsprechenden Kunststoff-Spritzgusswerkzeuges gleichzeitig das Spreizelement hergestellt werden kann, wobei dieses weiter vorzugsweise einstückig z.B. über eine Fangleine mit dem Verkleidungsteil bzw. dem Trägerteil verbunden sein kann. Vorteilhafterweise befindet sich das Spreizelement bei der Verbindung von Verkleidungsteil und Trägerteil dann bereits in einer örtlichen Nähe zu dem Aufnahmeelement und kann von einem Montagearbeiter einfach in das Aufnahmeelement gesteckt werden. Eine eventuell vorgesehene Fangleine kann an dem Spreizelement verbleiben, kann jedoch auch nach erfolgter Montage entfernt werden. Auch das Verbindungsteil kann in einem Kunststoff-Spritzgussverfahren, vorzugsweise aus einem faserverstärkten Thermoplast, hergestellt sein. Vorzugsweise kann dann das Spreizelement einstückig mit dem Verbindungsteil hergestellt sein.

Das Verbindungsteil kann auch durch ein Blechteil gebildet sein. Bevorzugt handelt es sich bei dem Blechteil um ein gestanztes Blechteil. Zur Erhöhung der Eigensteifigkeit des Verbindungsteils können bevorzugt alle oder zumindest einige der Randbereiche des Blechteils ganz oder abschnittsweise umgebördelt sein und / oder das Blechteil zusätzliche Sicken oder Rippen aufweisen. Ein entsprechendes Verbindungsteil, das durch ein Blechteil gebildet ist, lässt sich besonders kostengünstig in einer Großserienfertigung herstellen. Das Blechteil kann auch aus einem sogenannten Organoblech, insbesondere einem Faser-Matrix-Halbzeug mit thermoplastischer Matrix, hergestellt sein.

Bevorzugt ist der Verbindungsbereich durch ein Langloch zur Aufnahme eines Verbindungselements gebildet. Das Vorsehen eines Langloches ermöglicht es eine Verbindungsanordnung anzugeben die neben einem Ausgleich von fertigungs- und / oder montagebedingten Toleranzen in eine Raumrichtung (insbesondere in z-Richtung) zusätzlich einen Toleranzausgleich in eine weitere Raumrichtung (insbesondere in x-Richtung) aufweist.

In einer alternativen Ausführungsform kann das Verbindungsteil einstückig mit dem Verkleidungsteil oder dem Trägerteil hergestellt sein. Der Verbindungsbereich wird dann durch eine stoffschlüssige Verbindung mit dem anderen Montagebereich gebildet. Die einstückige Herstellung des Verbindungsteils zusammen mit dem Verkleidungsteil oder dem Trägerteil ermöglicht eine besonders kostengünstige Herstellung einer entsprechenden Verbindungsanordnung.

Das Verbindungsteil weist vorzugsweise ein Loch auf, wobei der Klemmbereich durch den Lochrand gebildet ist. Durch das Vorsehen eines Lochs innerhalb des Verbindungsteils kann besonders einfach ein Klemmbereich über dem Lochrand gebildet werden, wobei der Lochrand das Aufnahmeelement zumindest bereichsweise außenseitig um- bzw. übergreift. Das Loch kann hierbei eine kreisrunde, elliptische, quadratische, rechteckige oder dreieckige Form oder eine Kombination der vorgenannten Formen aufweisen.

Besonders bevorzugt weist der Lochrand hierbei einen von dem Verbindungsteil abstehenden, vorzugsweise senkrecht abstehenden, Kragen auf. Durch ein von dem Verbindungsteil abstehenden Kragen wird der Klemmbereich weiter vergrößert und der Kraft-, Reib- und / oder Formschluss zwischen Aufnahmeelement und Klemmbereich weiter verbessert. Der Kragen kann sich entlang des gesamten Lochrandes oder zumindest Abschnittsweise entlang des Lochrandes erstrecken.

Das Spreizelement kann ein Fixierelement zum Fixieren des Spreizelements an dem Verbindungsteil aufweisen. Das Fixierelement kann insbesondere durch eine Rast- und/oder Schnappverbindung gebildet sein. Besonders bevorzugt ist das Spreizelement über ein Fixierelement zum Fixieren des Spreizelements mit dem Verbindungsteil verbunden. Das Fixierelement kann hierbei an dem Spreizelement angeordnet oder an dem Verbindungsteil angeordnet sein. Insbesondere mittels einer Rast- und/oder Schnappverbindung kann das Spreizelement durch ein Fixierelement einfach und kostengünstig vorfixiert werden. Somit ist es nicht erforderlich, das Spreizelement während der Montage der Verbindungsanordnung separat zu montieren, da dieses gleichzeitig mit der Montage des Verbindungsteils erfolgt.

Besonders bevorzugt weist das Verbindungsteil ein Loch auf, wobei der Klemmbereich durch den Lochrand gebildet ist und der Lochrand einen von dem Verbindungsteil abstehenden Kragen aufweist und das Fixierelement den Kragen zumindest bereichsweise umgreift. Hierbei kann vorgesehen sein, dass das Fixierelement über eine Rast- und/oder Schnappverbindung kraft- und / oder formschlüssig über den Kragen mit dem Verbindungsteil verbunden ist.

Bevorzugt weist die Innenkontur des Aufnahmeelements und die Außenkontur des Spreizkörpers die gleiche Kontur auf. Insbesondere können die Innenkontur des Aufnahmeelements und die Außenkontur des Spreizkörpers kreisförmig ausgebildet sein. Durch eine kreisförmige Ausbildung der Innenkontur des Aufnahmeelements und der Außenkontur des Spreizkörpers sind diese zusätzlich ineinander rotierbar beweglich gelagert, so dass über die erfindungsgemäße Verbindungsanordnung eine weitere Raumrichtung erschließbar ist, in welcher fertigungs- und / oder montagebedingte Toleranzen ausgeglichen werden können (insbesondere in y-Richtung).

Ein Verfahren zur Montage einer erfindungsgemäßen Verbindungsanordnung, insbesondere nach einem der Ansprüche 1 bis 12, ist dadurch gekennzeichnet, dass in einem ersten Schritt der Verbindungsbereich mit dem anderen Montagebereich verbunden wird, bevor in einem nachfolgenden Schritt durch das Spreizen des in dem Aufnahmeelement zumindest abschnittsweise aufgenommenen Spreizkörpers das Aufnahmeelement durch den Spreizkörper aufgeweitet, und zwischen dem Aufnahmeelement und dem Klemmbereich ein Kraft-, Reib- und/oder Formschluss hergestellt wird. Vorteilhafterweise kann sich bei der Ausführung des Verfahrens dann das Spreizelement an dem Verbindungsteil bzw. über das Verbindungsteil an dem Trägerteil oder dem Verkleidungsteil (je nachdem an welchem der Bauteile das Aufnahmeelement angeordnet ist) abstützen, so dass vorteilhafterweise beim Spreizen des Spreizkörpers aufgrund einer hierfür erforderlichen Krafteinwirkung das Verkleidungsteil oder das Trägerteil nicht aus seiner festzulegenden Montageposition wieder verschoben werden kann.

Im Folgenden wird die Erfindung anhand lediglich Ausführungsbeispiele darstellender Figuren gezeigt. Gleiche oder funktionsgleiche Elemente werden mit den gleichen Bezugszeichen versehen.

Es zeigen schematisch:
- Fig. 1a bis 1d: eine Querschnittdarstellung durch eine erfindungsgemäße Verbindungsanordnung in verschiedenen Stadien der Montage der Verbindungsanordnung,
- Fig. 2a und 2b: eine Draufsicht auf eine erfindungsgemäße Verbindungsanordnung mit Darstellung ihrer Einzelteile sowie im vormontierten Zustand.

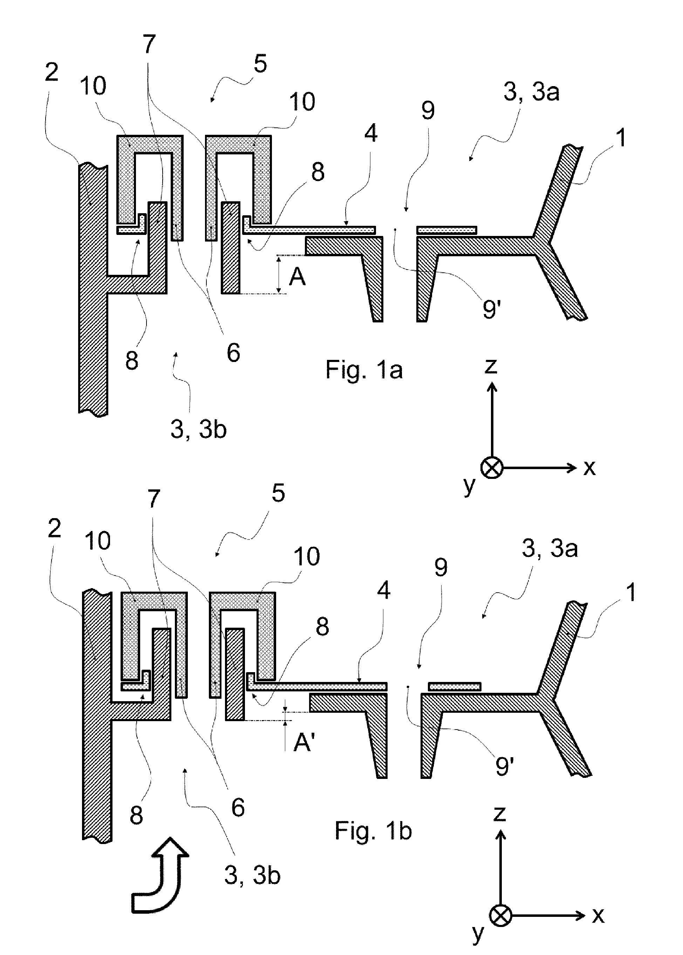

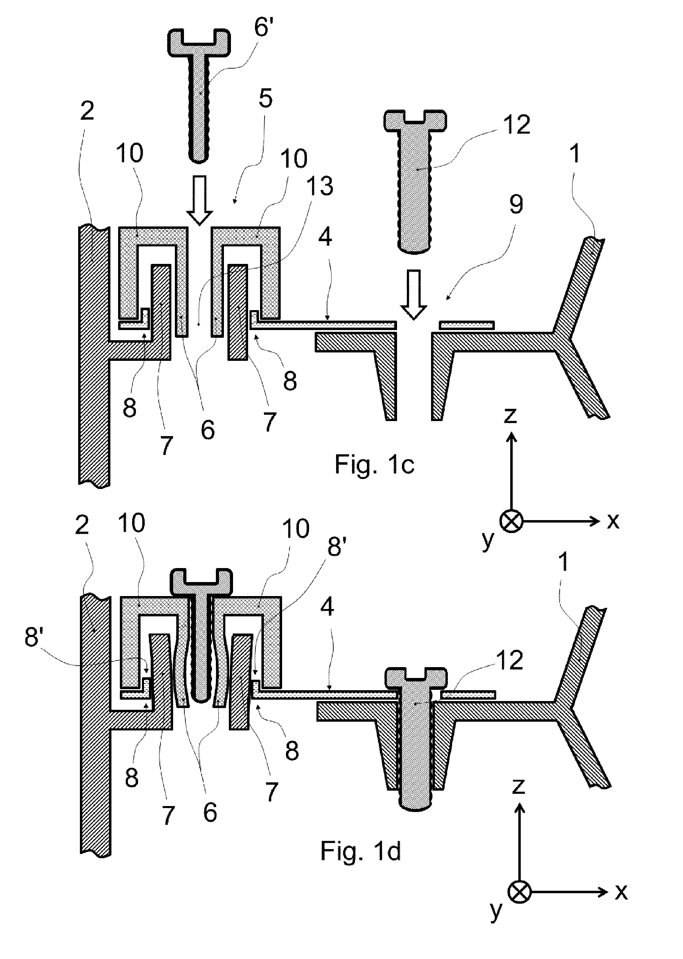

Die Fig. 1 a zeigt eine erfindungsgemäße Anordnung mit selbsttätigem Ausgleich von fertigungs- und / oder montagebedingten Toleranzen zum Verbinden eines Trägerteils 1 mit einem Verkleidungsteil 2, umfassend ein Trägerteil 1 mit einem Montagebereich 3, 3a, ein Verkleidungsteil 2 mit einem weiteren Montagebereich 3, 3b, ein Verbindungsteil 4 zum Verbinden der beiden Montagebereiche 3, 3a, 3b vom Trägerteil 1 und Verkleidungsteil 2 und ein Spreizelement 5 mit einem länglich ausgebildeten Spreizkörper 6. In diesem Ausführungsbeispiel ist an dem Montagebereich 3, 3a des Verkleidungsteils 2 ein rohrförmiges Aufnahmeelement 7 zur Aufnahme des Spreizkörpers 6 vorgesehen. Der Spreizkörper 6 und das Aufnahmeelement 7 sind so aufeinander abgestimmt, dass der Spreizkörper 6 innerhalb des Aufnahmeelements 7 beweglich lager- und / oder verschiebbar ist, wenn der Spreizkörper 6 ungespreizt ist. Das Verbindungsteil 4 weist einen Klemmbereich 8, 8' auf, der das Aufnahmeelement 7 zumindest bereichsweise außenseitig umgreift. Das Verbindungsteil 4 weist einen von dem Klemmbereich 8, 8' beabstandeten Verbindungsbereich 9, 9' zum Verbinden mit dem anderen Montagebereich 3, 3b des Trägerteils 1 auf. Das Aufnahmeelement 7 ist so ausgebildet, dass durch Spreizen des in dem Aufnahmeelement 7 zumindest abschnittsweise aufgenommenen Spreizkörpers 6 das Aufnahmeelement 7 durch den Spreizkörper 6 aufgeweitet und zwischen dem Aufnahmeelement 7 und dem Klemmbereich 8, 8' ein Kraft-, Reib- und / oder Formschluss hergestellt wird. Der Verbindungsbereich 9 ist durch ein Langloch 9' zur Aufnahme eines Verbindungselements 12 (vgl. Fig. 1 b) gebildet. Der Vergleich der Fig. 1 a mit der Fig. 1 b zeigt, dass über das Langloch 9' auch in x-Richtung fertigungs- und / oder montagebedingte Toleranzen ausgeglichen werden können. Durch das Abstimmen des Spreizkörpers 6 und des Aufnahmeelements 7 derart, dass der Spreizkörper 6 innerhalb des Aufnahmeelements 7 beweglich lager- und / oder verschiebbar ist, wenn der Spreizkörper 6 ungespreizt ist, kann zudem ein Ausgleich der fertigungs- und / oder montagebedingten Toleranzen in z-Richtung (vergleiche Position A zu Position A') erfolgen. Die entsprechende Bewegung in x- und z-Richtung ist durch einen Doppelpfeil in der Fig. 1 b angedeutet. Das Verbindungsteil 4 ist durch ein gestanztes Blechteil gebildet. Alternativ kann das Verbindungsteil 4 einstückig mit dem Verkleidungsteil 2 oder dem Trägerteil 1 hergestellt und der Verbindungsbereich 9 durch eine stoffschlüssige Verbindung mit dem anderen Montagebereich 3, 3a, 3b gebildet sein. Das Verbindungsteil 4 weist ein Loch 13 (vgl. Fig. 1 c) auf, wobei der Klemmbereich 8 durch den Lochrand 8'gebildet ist. Der Lochrand 8' weist einen von dem Verbindungsteil 4 abstehenden Kragen auf (vgl. Fig. 1d). Loch 13 und abstehender Kragen lassen sich ebenfalls besonders einfach während des Stanzvorgangs des Blechteils realisieren für den Fall, dass das Verbindungsteil 4 durch ein Blechteil gebildet ist. Das Spreizelement 5 ist durch ein Fixierelement 10 zum Fixieren des Spreizelements 5 mit dem Verbindungsteil 4 verbunden. In dem in den Fig. 1a bis 1 d gezeigten Ausführungsbeispiel ist das Fixierelement 10 an dem Spreizelement 5 angeordnet. Es kann insbesondere einstückig mit dem Spreizelement 5 ausgebildet werden. Alternativ kann vorgesehen sein, dass das Fixierelement an dem Verbindungsteil angeordnet ist. Das Fixierelement 10 umgreift den Kragen des Lochrandes 8' kraft- und / oder formschlüssig. Hierdurch lässt sich das Spreizelement 5 relativ einfach über eine Rast- und/oder Schnappverbindung mit dem Verbindungsteil 4 verbinden. Ein Montageverfahren zur Montage einer erfindungsgemäßen Verbindungsanordnung umfasst den Schritt des Verbindens des Verbindungsteils 4 mit dem anderen Montagebereich 3, 3a, bevor in einem nachfolgenden Schritt durch das Spreizen des in dem Aufnahmeelement 7 zumindest abschnittsweise aufgenommenen Spreizkörpers 6 das Aufnahmeelement 7 durch den Spreizkörper 6 aufgeweitet und zwischen dem Aufnahmeelement 7 und dem Klemmbereich 8, 8' ein Kraft-, Reib- und / oder Formschluss hergestellt wird. Zum Spreizen des Spreizkörpers 6 ist ein Spreizmittel 6' vorgesehen. Das entsprechende Spreizmittel 6' ist in der Fig. 1c vor dem Einführen in den Spreizkörper 6 dargestellt. Die Verbindung des Trägerteils 1 mit dem Verbindungsteil 4 erfolgt über den Verbindungsbereich 9, der durch ein Langloch 9' zur Aufnahme eines Verbindungselements 12 gebildet ist. Das Verbindungselement 12 kann insbesondere ein selbstschneidendes Schraubelement sein. Wie in den Fig. 1a bis Fig. 1 d ersichtlich ist, kann das Aufnahmeelement 7 alternativ auch an dem Trägerteil 1 und entsprechend der andere Montagebereich an dem Verkleidungsteil 2 vorgesehen sein.

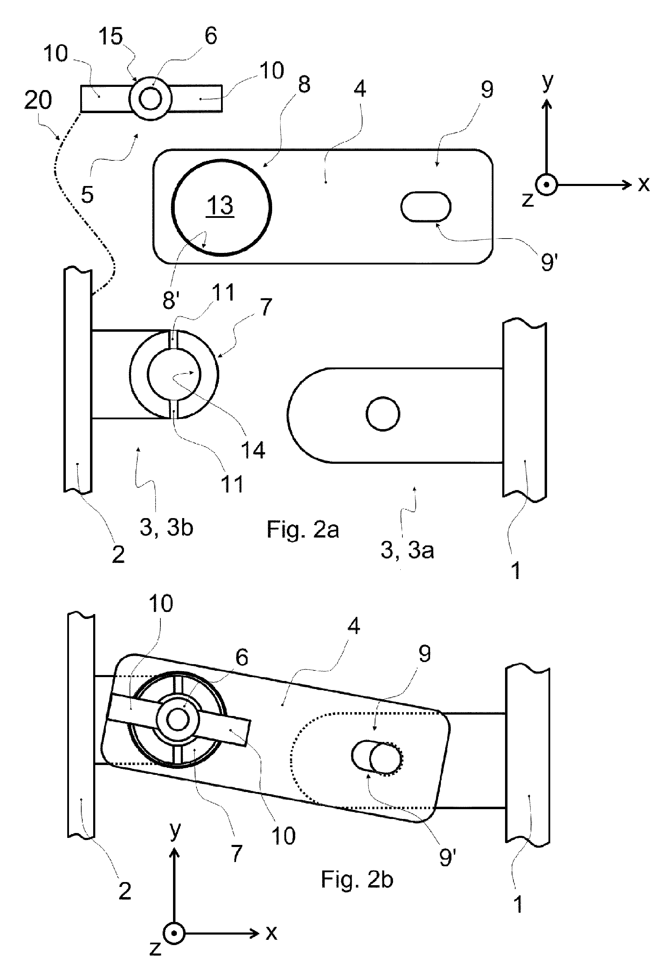

Die Fig. 2a zeigt eine Draufsichtsdarstellung einer erfindungsgemäßen Verbindungsanordnung im noch nicht verbundenen bzw. noch nicht montierten Zustand. Die Verbindungsanordnung wird hierbei durch ein Trägerteil 1 mit einem Montagebereich 3, 3a, durch ein Verkleidungsteil 2 mit einem weiteren Montagebereich 3, 3b und ein Verbindungsteil 4 zum Verbinden der beiden Montagebereiche 3, 3a, 3b von Trägerteil 1 und Verkleidungsteil 2 gebildet. Ferner umfasst die Verbindungsanordnung ein Spreizelement 5 mit einem, vorzugsweise länglich ausgebildeten, Spreizkörper 6. An einem Montagebereich 3, 3a (hier der des Verkleidungsteils 2) ist ein rohrförmiges Aufnahmeelement 7 zur Aufnahme des Spreizkörpers 6 vorgesehen, wobei der Spreizkörper 6 und das Aufnahmeelement 7 so aufeinander abgestimmt sind, dass der Spreizkörper 6 innerhalb des Aufnahmeelements 7 beweglich lager- und / oder verschiebbar ist, wenn der Spreizkörper 6 ungespreizt ist. Das Verbindungsteil 4 weist einen Klemmbereich 8, 8' auf, der so ausgebildet ist, dass er das Aufnahmeelement 7 zumindest bereichsweise außenseitig umgreifen kann. Das Verbindungsteil 4 weist ferner einen von dem Klemmbereich 8, 8' beabstandeten Verbindungsbereich 9, 9' zum Verbinden mit dem anderen Montagebereich 3, 3b (hier dem des Trägerteils 1) auf. Das Aufnahmeelement 7 ist so ausgebildet, dass durch das Spreizen des Spreizkörpers 6 das Aufnahmeelement 7 durch den Spreizkörper 6 aufweitbar und zwischen dem Aufnahmeelement 7 und dem Klemmbereich 8, 8' ein Kraft-, Reib- und / oder Formschluss herstellbar ist. Das Aufnahmeelement 7 weist zwei schlitzförmige Materialausnehmungen 11 auf, die sich beim Spreizen des Spreizkörpers 6 aufweiten. Zur Vereinfachung der Montage der Verbindungsanordnung ist das Spreizelement 5 über eine Fangleine 20 einstückig mit dem Verkleidungsteil 2 ausgebildet. Alternativ kann das Spreizelement 5 auch über eine Fangleine einstückig mit dem Trägerteil 1 ausgebildet sein. Die Fangleine 20 kann nach der Montage der Verbindungsanordnung bzw. vor der Montage der Verbindungsanordnung entfernt werden (vgl. Fig. 2b). Es kann jedoch auch vorgesehen sein, dass die Fangleine dauerhaft das Spreizelement 5 einstückig mit dem Verkleidungsteil 2 (bzw. mit dem Trägerteil 1) verbindet. Die Innenkontur 14 des Aufnahmeelements 7 und die Außenkontur 15 des Spreizkörpers 6 sind kreisförmig ausgebildet. In Fig. 2b ist ersichtlich, dass dann vorteilhafterweise auch ein Versatz von Trägerteil 1 und Verkleidungsteil 2 in y-Richtung ausgeglichen werden kann. Ein Ausgleich von Toleranzen in x-Richtung erfolgt durch den als Langloch 9' ausgebildeten Verbindungsbereich 9. Nicht naher dargestellt ist, dass bei der Endmontage in einem ersten Schritt der Verbindungsbereich 9, 9' mit dem anderen Montagebereich 3, 3a verbunden wird, bevor in einem nachfolgenden Schritt durch das Spreizen des in dem Aufnahmeelement 7 zumindest abschnittsweise aufgenommenen Spreizkörpers 6 das Aufnahmeelement 7 durch den Spreizkörper 6 aufgeweitet, und zwischen dem Aufnahmeelement 7 und dem Klemmbereich 8, 8' ein Kraft-, Reib- und/oder Formschluss hergestellt wird. Die Verbindung des Trägerteils 1 mit dem Verbindungsteil 4 erfolgt über den Verbindungsbereich 9, der durch ein Langloch 9' zur Aufnahme eines Verbindungselements 12 (hier nicht näher dargestellt) gebildet ist. Das Verbindungselement 12 kann insbesondere ein selbstschneidendes Schraubelement sein. Zum Spreizen des Spreizkörpers 6 ist ein hier ebenfalls nicht näher dargestelltes Spreizmittel 6' vorgesehen.

## Patentansprüche

1. Verbindungsanordnung mit selbsttätigem Ausgleich von fertigungs- und/oder montagebedingten Toleranzen zum Verbinden eines Trägerteils (1) mit einem Verkleidungsteil (2), umfassend:
- ein Trägerteil (1) mit einem Montagebereich (3, 3a),
- ein Verkleidungsteil (2) mit einem weiteren Montagebereich (3, 3b),
- ein Verbindungsteil (4) zum Verbinden der beiden Montagebereiche (3, 3a, 3b)
von Trägerteil (1) und Verkleidungsteil (2),
**dadurch gekennzeichnet, dass**
- die Verbindungsanordnung ferner ein Spreizelement (5) mit einem, vorzugsweise länglich ausgebildeten, Spreizkörper (6) umfasst,
- an einem Montagebereich (3, 3a) ein rohrförmiges Aufnahmeelement (7) zur Aufnahme des Spreizkörpers (6) vorgesehen ist, wobei der Spreizkörper (6) und das Aufnahmeelement (7) so aufeinander abgestimmt sind, dass der Spreizkörper (6) innerhalb des Aufnahmeelements (7) beweglich lager- und/oder verschiebbar ist, wenn der Spreizkörper (6) ungespreizt ist,
- das Verbindungsteil (4) einen Klemmbereich (8, 8') aufweist der das Aufnahmeelement (7) zumindest bereichsweise außenseitig umgreift,
- das Verbindungsteil (4) einen von dem Klemmbereich (8, 8') beabstandeten Verbindungsbereich (9, 9') zum Verbinden mit dem anderen Montagebereich (3, 3b) aufweist, und
- das Aufnahmeelement (7) so ausgebildet ist, dass durch das Spreizen des in dem Aufnahmeelement (7) zumindest abschnittsweise aufgenommenen Spreizkörpers (6) das Aufnahmeelement (7) durch den Spreizkörper (6) aufgeweitet, und zwischen dem Aufnahmeelement (7) und dem Klemmbereich (8, 8') ein Kraft-, Reib- und/oder Formschluss hergestellt wird.

2. Verbindungsanordnung nach Anspruch 1, **dadurch gekennzeichnet, dass** zum Spreizen des Spreizkörpers (6) ein Spreizmittel (6') vorgesehen ist.

3. Verbindungsanordnung nach einem der Ansprüche 1 oder 2, **dadurch gekennzeichnet, dass** das Aufnahmeelement (7) mindestens eine schlitzförmige Materialausnehmung (11) aufweist, die sich beim Spreizen des Spreizkörpers (6) aufweitet.

4. Verbindungsanordnung nach einem der vorstehenden Ansprüche, **dadurch gekennzeichnet, dass** das Spreizelement (5) einstückig mit dem Verkleidungsteil (2), dem Trägerteil (1) oder dem Verbindungsteil (4) hergestellt ist.

5. Verbindungsanordnung nach einem der vorstehenden Ansprüche, **dadurch gekennzeichnet, dass** das Verbindungsteil (4) durch ein, vorzugsweise gestanztes, Blechteil gebildet ist.

6. Verbindungsanordnung nach einem der vorstehenden Ansprüche, **dadurch gekennzeichnet, dass** der Verbindungsbereich (9) durch ein Langloch (9') zur Aufnahme eines Verbindungselements (12) gebildet ist.

7. Verbindungsanordnung nach einem der vorstehenden Ansprüche 1 bis 4, **dadurch gekennzeichnet, dass** das Verbindungsteil (4) einstückig mit dem Verkleidungsteil (2) oder dem Trägerteil (1) hergestellt und der Verbindungsbereich (9) durch eine stoffschlüssige Verbindung mit dem anderen Montagebereich (3, 3a, 3b) gebildet ist.

8. Verbindungsanordnung nach einem der vorstehenden Ansprüche, **dadurch gekennzeichnet, dass** das Verbindungsteil (4) ein Loch (13) aufweist, wobei der Klemmbereich (8) durch den Lochrand (8') gebildet ist.

9. Verbindungsanordnung nach Anspruch 8, **dadurch gekennzeichnet, dass** der Lochrand (8') einen von dem Verbindungsteil (4) abstehenden Kragen aufweist.

10. Verbindungsanordnung nach einem der vorstehenden Ansprüche, **dadurch gekennzeichnet, dass** das Spreizelement (5) durch ein Fixierelement (10) zum Fixieren des Spreizelements (5) mit dem Verbindungsteil (4) verbunden ist.

11. Verbindungsanordnung nach Anspruch 9 und 10, **dadurch gekennzeichnet, dass** der das Fixierelement (10) den Kragen umgreift.

12. Verbindungsanordnung nach einem der vorstehenden Ansprüche, **dadurch gekennzeichnet, dass** die Innenkontur (14) des Aufnahmeelements (7) und die Außenkontur (15) des Spreizkörpers (6) kreisförmig ausgebildet sind.
